# EUROPÄISCHE PATENTANMELDUNG

(11) **EP 0 933 154 A2**
(43) Veröffentlichungstag der Anmeldung: **04.08.1999**
(21) Anmeldenummer: 99100548.9
(22) Anmeldetag: 13.01.1999
(51) Int. Cl.: B23B 29/034

(54) **Plandrehkopf**

(30) Priorität: 30.01.1998 DE 19803613
(71) Anmelder: MAPAL Fabrik für Präzisionswerkzeuge Dr. Kress KG, D-73431 Aalen (DE)
(72) Erfinder: Kress, Dieter Dr.-Ing., 73431 Aalen (DE); Beck, Hans-W., 74889 Sinsheim-Hoffenheim (DE); Jäger, Herbert, 74889 Sinshaim-Elsenz (DE)
(74) Vertreter: Gleiss, Alf-Olav, Dr.jur. Dipl.-Ing.

(57) **Zusammenfassung**

Es wird ein Plandrehkopf mit mindestens einem wenigstens eine Messerplatte aufweisenden, um eine gegenüber der Mittelachse des Plandrehkopfs versetzte Drehachse drehbar gelagerten Rotationsschieber vorgeschlagen. Dieser ist gekennzeichnet durch einen Fliehkraftantrieb (19), der den Rotationsschieber (7) um seine Drehachse (9) dreht und der mindestens zwei Antriebskörper (21, 23) aufweist, die innerhalb des Grundkörpers (29) des Plandrehkopfs (1) im wesentlichen senkrecht zur Mittelachse (11) verschiebbar gelagert sind, und der mindestens eine den Antriebskörpern (21, 23) zugeordnete Rückstelleinrichtung (47) sowie eine Kopplungseinrichtung (35) umfaßt, die mit den Antriebskörpern (21, 23) zusammenwirkt, so daß diese eine gegenläufige Bewegung ausführen.

## Beschreibung

Die Erfindung betrifft einen Plandrehkopf mit mindestens einem, wenigstens eine Messerplatte aufweisenden Rotationsschieber gemäß Oberbegriff des Anspruchs 1.

Plandrehköpfe der hier angesprochenen Art sind bekannt. Sie weisen wenigstens einen Rotationsschieber auf, an dem eine Messerplatte angebracht ist, die der spanenden Bearbeitung einer im fertig bearbeiteten Zustand im wesentlichen ebenen Oberfläche dient. Während der Bearbeitung der Oberfläche wird der Rotationsschieber mit einer Antriebskraft beaufschlagt, so daß sich dieser um seine Drehachse dreht. Dabei wird in der Regel eine Drehbewegung von maximal von 180° durchgeführt. Der Rotationsschieber ist zur Ausführung der Drehbewegung mit einer auch als Zugseele bezeichneten Antriebsstange verbunden, die sich in Längsrichtung durch den Plandrehkopf erstreckt, und zwar bis in die den Plandrehkopf in Rotation versetzende Maschinenspindel. Es ist also erforderlich, für derartige Plandrehköpfe spezielle Maschinenspindeln vorzusehen. Derartige Plandrehköpfe sind also nicht allgemein einsetzbar. überdies sind derartige spezielle Maschinenspindeln sehr aufwendig und teuer.

Aufgabe der Erfindung ist es daher, einen Plandrehkopf der eingangs genannten Art zu schaffen, der einen einfachen Antrieb aufweist und der allgemein in bekannten Bearbeitungszentren einsetzbar ist.

Zur Lösung dieser Aufgabe wird ein Plandrehkopf vorgeschlagen, der die in Anspruch 1 genannten Merkmale aufweist. Er zeichnet sich durch einen im Plandrehkopf integrierten Fliehkraftantrieb aus, der den Rotationsschieber um seine Drehachse dreht. Dadurch, daß die Drehachse des Rotationsschiebers gegenüber der Mittelachse des Plandrehkopfs versetzt ist, kann bei der Drehung des Rotationsschiebers die spanende Bearbeitung einer Oberfläche durchgeführt werden. Der Plandrehkopf zeichnet sich weiter dadurch aus, daß der Fliehkraftantrieb mindestens zwei Antriebskörper aufweist, die in dem Grundkörper des Plandrehkopfs so untergebracht sind, daß sie bei einer Rotation des Werkzeugs verschiebbar sind. Die Antriebskörper wirken mit einer Rückstelleinrichtung zusammen, die diese in ihre Grundstellung zurückverlagert, wenn die Fliehkräfte unter einen vorgebbaren Grenzwert sinken. Zur Vermeidung einer Unwucht des Plandrehkopfs bei einer Verlagerung der Antriebskörper sind diese mit Hilfe einer Kopplungseinrichtung miteinander verbunden, die so ausgebildet ist, daß eine gegenläufige Bewegung der Antriebskörper erfolgt.

Bevorzugt wird ein Ausführungsbeispiel des Plandrehkopfs, das sich dadurch auszeichnet, daß die Kopplungseinrichtung Zahnstangen aufweist, die jeweils mit einem Antriebskörper verbunden und über ein Zahnrad miteinander gekoppelt sind. Diese Kopplung führt dazu, daß die beiden Antriebskörper jeweils um die gleiche Strecke gegenüber der Mittelachse des Plandrehkopfs verlagert werden und eine Unwucht bei der Verlagerung dieser Antriebskörper nicht auftreten kann.

Ein weiteres Ausführungsbeispiel des Plandrehkopfs zeichnet sich dadurch aus, daß die Rückstelleinrichtung mindestens ein Federelement aufweist, das auf wenigstens einen Antriebskörper wirkt. Das Federelement übt eine den Fliehkräften entgegenwirkende Kraft aus, die gegebenenfalls lediglich auf einen Antriebskörper wirkt. Da dieser über die Kopplungseinrichtung mit dem anderen Antriebskörper verbunden ist, wird der andere Antriebskörper auch dann mit einer Rückstellkraft beaufschlagt, wenn lediglich ein einziges Federelement vorgesehen ist. Der Plandrehkopf kann also sehr einfach aufgebaut sein, was einerseits eine kostengünstige Realisierung erlaubt, andererseits sehr kleine Bauformen.

Weitere Ausgestaltungen ergeben sich aus den übrigen Unteransprüchen.

Die Erfindung wird im folgenden anhand einer Zeichnung näher erläutert.

Es zeigen:
- Figur 1: eine Prinzipskizze eines Plandrehkopfs in Seitenansicht und
- Figur 2: einen Querschnitt durch den Plandrehkopf gemäß Figur 1.

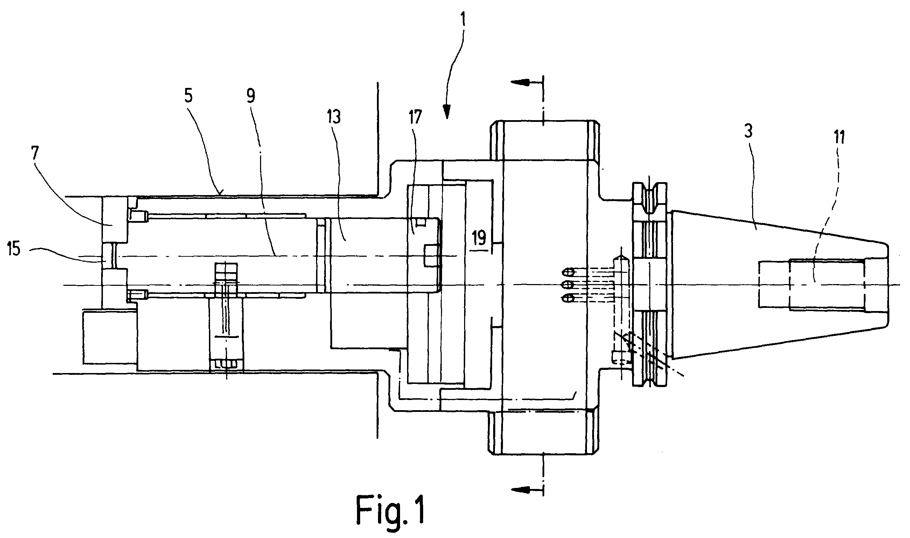

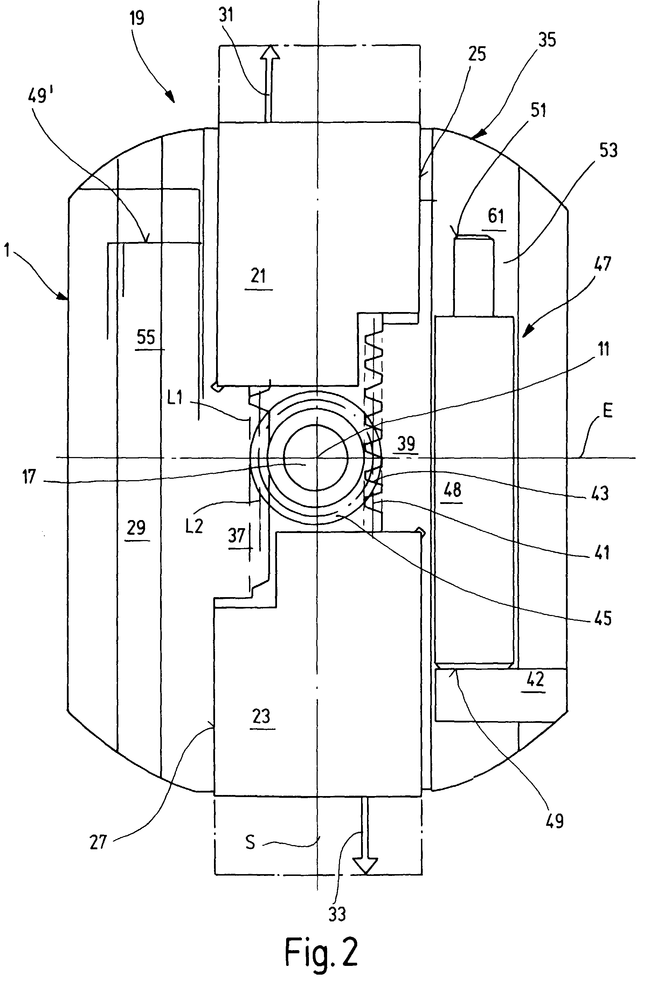

Figur 1 zeigt eine Prinzipskizze eines Plandrehkopfs 1 in Seitenansicht. Er umfaßt einen in eine hier nicht dargestellte Maschinenspindel einer Werkzeugmaschine einbringbaren Steilkegel 3 sowie einen Werkzeugkopf 5 mit einem Rotationsschieber 7, an den eine oder mehrere Messerplatten zur Bearbeitung einer Planfläche angebracht sein können. Der Rotationsschieber ist um eine Drehachse 9 drehbar, die zu einer Mittelachse 11 des Plandrehkopfs 1 -hier nach oben- versetzt angeordnet ist. Der Rotationsschieber 7 ist durch eine Antriebswelle 13 drehbar, die mit ihrem linken Ende 15 drehfest mit dem Rotationsschieber verbunden ist. Am rechten Ende 17 der Antriebswelle greift auf geeignete Weise ein Fliehkraftantrieb 19 ein, der in den Plandrehkopf 1 integriert ist, in Figur 1 aber nicht näher dargestellt, dafür in Figur 2 im einzelnen wiedergegeben ist.

Figur 2 zeigt einen Längsschnitt senkrecht zur Mittelachse 11 durch den Plandrehkopf 1, so daß der Fliehkraftantrieb 19 gemäß Figur 1 von rechts gesehen dargestellt ist.

Der Fliehkraftantrieb 19 umfaßt mindestens zwei Antriebskörper 21 und 23, die vorzugsweise in einer senkrecht zur Mittelachse 11 verlaufenden Ebene, also in der Bildebene von Figur 2, angeordnet sind. Sie sind in geeigneten Ausnehmungen 25 und 27 im Grundkörper 29 des Plandrehkopfs 1 untergebracht. Die Außenkontur der Antriebskörper 21 und 23 ist so auf die Ausnehmungen 25 und 27 abgestimmt, daß diese verschiebbar im Grundkörper 29 gelagert sind. Die Reibungskräfte zwischen den Antriebskörpern 21 und 23 und dem Grundkörper 29 sind so gewählt, daß die Antriebskörper bei einer Drehung des Plandrehkopfs 21 aufgrund der radial nach außen gegenüber der Mittelachse 11 wirkenden Fliehkräfte nach außen verlagerbar sind, was durch Doppelpfeile 31 und 33 angedeutet ist. Die Verlagerungsrichtung der Antriebskörper 21 und 23 ist vorzugsweise radial, da dabei die geringsten Reibungskräfte auftreten. Es ist jedoch auch möglich, daß die Antriebskörper unter Einwirkung der Fliehkraft unter einem Winkel gegenüber einer gedachten Senkrechten zur Mittelachse 11, also nicht direkt radial verlagert werden.

Die Antriebskörper 21 und 23 sind mit einer Kopplungseinrichtung 35 versehen, die dazu dient, die Bewegungen der beiden Antriebskörper 21 und 23 zu koppeln beziehungsweise so zu synchronisieren, daß sie sich in gleicher Weise entgegengesetzt zur Mittelachse 11 beziehungsweise einer mit der Mittelachse 11 zusammenfallenden Ebene E bewegen. Die Kopplungseinrichtung 35 stellt damit sicher, daß der Plandrehkopf 1 auch bei einer Verlagerung der Antriebskörper 21 und 23 im ausgewuchteten Zustand bleibt.

Die Kopplungseinrichtung 35 weist je eine mit den Antriebskörpern verbundene Zahnstange auf, wobei eine erste Zahnstange 37 mit dem ersten Antriebskörper 21 und eine zweite Zahnstange 39 mit dem zweiten Antriebskörper 23 so gekoppelt ist, daß sich die Zahnstangen gemeinsam mit den Antriebskörpern bewegen. Werden die Antriebskörper 21 und 23 der Fliehkraft folgend entsprechend den Doppelpfeilen 31 und 33 nach außen bewegt, so wird die erste Zahnstange 37 mit dem ersten Antriebskörper 21 und die zweite Zahnstange 39 mit dem zweiten Antriebskörper 23 nach außen verlagert, hier parallel zu einer gedachten Senkrechten S, die senkrecht auf der Ebene E steht, beziehungsweise mit einer gedachten Durchmesserlinie zusammenfällt.

Die Zahnstangen 37 und 39 sind auf ihrer der Mittelachse 11 zugewandten Seite mit Zähnen versehen. Aus Gründen der Vereinfachung sind die Zähne 41, 43 und so weiter der zweiten Zahnstange 39 dargestellt, während die der ersten Zahnstange 37 durch zwei Linien L1 und L2 lediglich angedeutet sind.

Die Zähne 41, 43 und so weiter kämmen mit einem Zahnrad 45, dessen Mittel- und Drehachse mit der Mittelachse 11 zusammenfällt, und das bei einer Verlagerung der Zahnstangen 37 und 39 in Rotation versetzt wird, dergestalt, daß bei einer Auswärtsbewegung der Antriebskörper 21 und 23 entsprechend den Doppelpfeilen 31 und 33 eine Drehbewegung des Zahnrads 45 im Uhrzeigersinn bewirkt wird. Das Zahnrad 45 dient der Kopplung der Bewegung der beiden Antriebskörper 21 und 23.

Es ist ohne weiteres ersichtlich, daß die Antriebskörper 21 und 23 sowie die zugehörigen Zahnstangen 37 und 39 auch gegenüber der Senkrechten S spiegelverkehrt angeordnet werden können, so daß eine Drehung des Zahnrads 45 im Gegenuhrzeigersinn erfolgt, wenn die Antriebskörper nach außen verlagert werden. Das Zahnrad 45 ist drehfest mit dem in Figur 1 dargestellten rechten Ende 17 der Antriebswelle 13 gekoppelt. Es können hier auch beliebige Zwischenelemente angeordnet werden, die eine Drehung des Zahnrads 45 auf die Antriebswelle 13 übertragen und eine Drehung dieser Antriebswelle bewirken. Besonders bevorzugt wird eine unmittelbare Kopplung zwischen Zahnrad 45 und Antriebswelle 13, die also auf eine Zwischenschaltung eines Getriebes verzichtet, wodurch der Plandrehkopf 1 besonders klein und kompakt baut. Die Bewegung der Antriebskörper 21 und 23 führt also zu einem fliehkraftabhängigen Antrieb des Rotationsschiebers 7.

Um eine gleichmäßige Drehbewegung des Rotationsschiebers 7 und damit einen gleichmäßigen Vorschub der Messerplatte zu erreichen, ist eine Ölbremse in den Plandrehkopf integriert, die beispielsweise so ausgelegt ist, daß eine Scheibe, in die eine Drossel integriert ist, und die drehend am Rotationsschieber 7 angebracht ist, diesen abbremst, indem Öl durch die Drossel geführt wird. Für die schnelle Rückstellung der Messerplatte, die durch Federdruck bewirkt wird, ist ein Rückschlagventil vorgesehen, welches das Öl quasi ungedrosselt zurückströmen läßt.

Aus der Beschreibung der Funktion der Antriebskörper 21 und 23 ist ersichtlich, daß es auch möglich ist, entlang der Mittelachse 11 mehrere Antriebskörper anzuordnen, die gegebenenfalls auch um 90° versetzt in den Grundkörper 29 des Plandrehkopfs 1 eingebracht werden. Bei einer derartigen Ausgestaltung werden die auf die Antriebswelle 13 wirkenden Kräfte verstärkt.

Der Plandrehkopf 1 beziehungsweise der Fliehkraftantrieb 19 ist mit einer Rückstelleinrichtung 47 versehen, die mindestens ein Federelement 48 aufweist. Das Federelement 48 ist hier als Gasdruckfeder ausgebildet, die sich einerseits an einer geeigneten, als Widerlager dienenden Schulter 49 im Grundkörper 29 abstützt und andererseits an einem Vorsprung 51, der ebenfalls als Widerlager dient und der an der zweiten Zahnstange 39 vorgesehen ist.

Das Federelement 48 kann sehr kompakt ausgebildet sein. Es ist in einer Ausnehmung 53 im Grundkörper 29 untergebracht. Es zeigt sich, daß die Rückstelleinrichung 47 mit beliebigen, als Druckfeder wirkenden Federelementen 48 ausgerüstet werden kann.

Aufgrund der Tatsache, daß die beiden Antriebskörper 21 und 23 über die Kopplungseinrichtung 35, das heißt über die Zahnstangen 37 und 39 sowie über das Zahnrad 45 miteinander mechanisch starr gekoppelt sind, reicht ein einziges Federelement 48 aus, um eine Rückstelleinrichtung 47 zu realisieren. Vorzugsweise, einerseits um die Rückstellkräfte zu erhöhen und andererseits um eine Umwucht des Plandrehkopfs 1 zu vermeiden, werden jedoch zwei symmetrisch zur Senkrechten S angeordnete Federelemente 48 und 55 vorgesehen. Das Federelement 55 ist hier nur in seinem der Schulter 49' zugewandten Bereich angedeutet; es ist ansonsten identisch ausgebildet wie das Federelement 48.

Das Federelement 48 übt eine Druckkraft auf den Vorsprung 51 aus, die in Richtung des Doppelpfeils 31 gerichtet ist. Die Druckkraft wirkt also entgegen der durch den Doppelpfeil 33 angedeuteten bei Einwirkung einer Fliehkraft gegebenen Verlagerungsrichtung des Antriebskörpers 23.

Die Federelemente 48 und 55 der Rückstelleinrichtung 47 sind so ausgelegt, daß erst ab einer bestimmten, vorgegebenen Größe der Fliehkraft, die in Richtung der Doppelpfeile 31 und 33 wirkt, eine Verlagerung der Antriebskörper 21 und 23 gegebenen ist. Bis zum Erreichen dieser Grenzfliehkraft wird das Zahnrad 45 also durch die Zahnstangen 39 und 37 nicht bewegt. Der Rotationsschieber 7 bleibt also in Ruhe. Erst nach Überschreiten dieser Grenzdrehzahl bewegen sich die Antriebskörper 21 und 23 des Fliehkraftantriebs 19 nach außen, so daß über die Zahnstangen 37 und 39 das Zahnrad 45 und damit die Antriebswelle 13 bewegt wird. Dies führt zu einer Drehbewegung des Rotationsschiebers 7 und damit zu einer Verlagerung der mit diesem gekoppelten Messerplatte. Diese bearbeitet damit einen ringförmigen Bereich auf einer Planfläche, die mit dem Plandrehkopf 1 bearbeitet wird.

Wird die Fliehkraft unterschritten, können die Federelemente 48 und 55 entgegen der in Richtung der Doppelpfeile 31 und 33 wirkenden Fliehkraft die Antriebskörper 21 und 23 in Richtung zu Mittelachse 11 beziehungsweise zur Ebene E verlagern.

Diese entgegen der Richtung der Doppelpfeile 31, 33 von den Federelementen 48 und 55 bewirkte Rückstellbewegung der Antriebskörper 21 und 23 bewirkt über die Zahnstangen 37 und 39 eine Drehbewegung des Zahnrads 45 entgegen dem Uhrzeigersinn, so daß auch der Rotationsschieber 7 über die Antriebswelle 13 in entgegesetzter Richtung bewegt wird.

Es zeigt sich, daß der Plandrehkopf 1 sehr einfach aufgebaut ist, und daß durch die Auslegung der Rückstelleinrichtung 47 beziehungswseise die des Federelements 48 bzw. der Federelemente 48 und 55 eine radiale Auswärtsbewegung der Antriebskörper 21 und 23 ab einer vorbestimmbaren Drehzahl des Plandrehkopfs 1 eintritt und damit eine Drehbewegung des Rotationsschiebers 7. Die Grenzdrehzahl des Plandrehkopfs 1 wird auch durch das Gewicht beziehungsweise die Masse der Antriebskörper 21 und 23 bestimmt. Diese können aus Metall bestehen, beispielsweise aus dem gleichen Material wie der Plandrehkopf 1 oder aber vorzugsweise aus sogenanntem Schwermetall, beispielsweise aus gesintertem Wolfram, dessen Dichte etwa doppelt so groß ist wie die des Ausgangsmaterials des Plandrehkopfs 1.

Aus der Beschreibung wird ohne weiteres ersichtlich, daß über geeignete Zahnräder im Inneren des Plandrehkopfs 1 auch mehrere Antriebswellen und damit mehrere Rotationsschieber von den Antriebskörpern in Rotation versetzt werden können. Das heißt also, daß der Plandrehkopf 1 nicht nur mit einem einzigen Rotationsschieber 7 versehen sein kann, wie dieser hier in der Beschreibung erwähnt wurde.

Aus der Beschreibung der Figuren 1 und 2 und aus den Angaben zur Funktion des Plandrehkopfs 1 beziehungsweise des Fliehkraftantriebs 19 wird deutlich, daß der Plandrehkopf 1 sehr einfach aufgebaut ist und daß insbesondere auf herkömmliche Zugseelen für die Drehbewegung des Rundschiebers 7 verzichtet werden kann. Der Plandrehkopf 1 kann also ohne irgendwelche Anpassungsarbeiten zusammen mit herkömmlichen Maschinenspindeln verwendet werden und ohne weiteres in bekannten CNC-Stationen eingesetzt werden. Der einfache Aufbau des Plandrehkopfs 1 führt zu einem relativ geringen Platzbedarf, so daß der Plandrehkopf 1 sehr kompakt sein kann. Es zeigt sich auch, daß das Werkzeug unabhängig von der Stellung der Antriebskörper 21 und 23 aufgrund der Kopplungseinrichtung 35 immer ausgewuchtet ist. Es können unter anderem auch daher sehr hohe Drehzahlen bis 6.000 U/min und darüber realisiert werden. Augfrund des einfachen Aufbaus ist der hier beschriebene Plandrehkopf 1 auch sehr wartungsarm.

## Patentansprüche

1. Plandrehkopf mit mindestens einem wenigstens eine Messerplatte aufweisenden, um eine gegenüber der Mittelachse des Plandrehkopfs versetzte Drehachse drehbar gelagerten Rotationsschieber, **gekennzeichnet durch** einen Fliehkraftantrieb (19), der den Rotationsschieber (7) um seine Drehachse (9) dreht und der mindestens zwei Antriebskörper (21, 23) aufweist, die innerhalb des Grundkörpers (29) des Plandrehkopfs (1) im wesentlichen senkrecht zur Mittelachse (11) verschiebbar gelagert sind, und der mindestens eine den Antriebskörpern (21, 23) zugeordnete Rückstelleinrichtung (47) sowie eine Kopplungseinrichtung (35) umfaßt, die mit den Antriebskörpern (21, 23) zusammenwirkt, so daß diese eine gegenläufige Bewegung ausführen.

2. Plandrehkopf nach Anspruch 1, **dadurch gekennzeichnet**, daß die Kopplungseinrichtung (35) je eine mit einem Antriebskörper (21, 23) verbundene Zahnstange (37, 39) aufweist, die über ein Zahnrad (45) miteinander gekoppelt sind.

3. Plandrehkopf nach Anspruch 1 oder 2, **dadurch gekennzeichnet**, daß die Rückstelleinrichtung (47) mindestens 1 Federelement (48) aufweist.

4. Plandrehkopf nach Anspruch 3, **dadurch gekennzeichnet**, daß die Rückstelleinrichtung (47) so ausgebildet ist, daß jedem Antriebskörper (21, 23) ein Federelement (48, 55) zugeordnet ist.

5. Plandrehkopf nach Anspruch 3 oder 4, **dadurch gekennzeichnet**, daß das Federelement (48, 55) als Druckfeder, vorzugsweise als Gasdruckfeder, ausgebildet ist.

6. Plandrehkopf nach Anspruch 5, **dadurch gekennzeichnet**, daß die Druckfeder im wesentlichen parallel zur Bewegungsrichtung (31, 33) der Antriebskörper (21, 23) angeordnet ist.

7. Plandrehkopf nach einem der vorhergehenden Ansprüche, **dadurch gekennzeichnet**, daß der Rotationsschieber (7) über eine Antriebswelle (13) drehbar ist, die mit ihrem einen Ende (15) mit dem Rotationsschieber (7) drehfest gekoppelt ist.

8. Plandrehkopf nach einem der hervorgehenden Ansprüche, **dadurch gekennzeichnet**, daß die Antriebswelle (13) mit ihrem anderen Ende (17) mit dem Fliehkraftantrieb (19) gekoppelt ist.

9. Plandrehkopf nach einer der vorhergehenden Ansprüche, **dadurch gekennzeichnet**, daß die Antriebswelle (13) mit dem Zahnrad (45) gekoppelt ist.

10. Plandrehkopf nach einem der vorhergehenden Ansprüche, **dadurch gekennzeichnet**, daß eine Drosseleinrichtung vorgesehen ist, die die von dem Fliehkraftantrieb (19) bewirkte Bewegung beeinflußt und eine gleichmäßige, gebremste Rotationsbewegung des Rotationsschiebers (7) in einer Richtung ermöglicht und vorzugsweise eine praktisch ungebremste Rück-Drehung des Rotationsschiebers (7) gewährleistet.
